(19) Europäisches Patentamt
European Patent Office
Office européen des brevets

(11) EP 4 535 428 A1

(12) EUROPEAN PATENT APPLICATION
published in accordance with Art. 153(4) EPC

(43) Date of publication:
09.04.2025 Bulletin 2025/15

(21) Application number: 22944762.8

(22) Date of filing: 30.05.2022

(51) International Patent Classification (IPC):
H01L 29/06 (2006.01)     G02F 3/00 (2006.01)

(52) Cooperative Patent Classification (CPC):
G02F 3/00; H10D 62/10

(86) International application number:
PCT/JP2022/021961

(87) International publication number:
WO 2023/233473 (07.12.2023 Gazette 2023/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FUJITSU LIMITED
Kawasaki-shi, Kanagawa 211-8588 (JP)

(72) Inventors:
• ISHIGURO, Tetsuro
  Kawasaki-shi, Kanagawa 211-8588 (JP)

• MIYATAKE, Tetsuya
  Kawasaki-shi, Kanagawa 211-8588 (JP)
• IWAI, Toshiki
  Kawasaki-shi, Kanagawa 211-8588 (JP)
• KAWAGUCHI, Kenichi
  Kawasaki-shi, Kanagawa 211-8588 (JP)
• DOI, Yoshiyasu
  Kawasaki-shi, Kanagawa 211-8588 (JP)
• SATO, Shintaro
  Kawasaki-shi, Kanagawa 211-8588 (JP)

(74) Representative: Hoffmann Eitle
Patent- und Rechtsanwälte PartmbB
Arabellastraße 30
81925 München (DE)

(54) QUANTUM DEVICE AND METHOD FOR MANUFACTURING QUANTUM DEVICE

(57) A quantum device includes a first waveguide, an optical resonator that is coupled to the first waveguide, a first light source that introduces first light into the first waveguide, and a second light source that irradiates the optical resonator with second light. The optical resonator includes a second waveguide extending in a first direction and a color center provided in the second waveguide. The second light source has an optical axis in a second direction perpendicular to the first direction, and the color center is irradiated with the second light.

FIG. 1

**Description**

FIELD

The embodiments discussed herein are related to a quantum device and a method for manufacturing a quantum device.

BACKGROUND

In recent years, research and development of quantum computers have been vigorously advanced. For example, a quantum computer that uses a level of an electron spin of a color center of diamond as a qubit is known. In such quantum computer, information of electron spin is converted into information of photon, and optical reading is performed.

SUMMARY

TECHNICAL PROBLEM

Optical transition used for reading a state occurs probabilistically based on the selection rule of quantum mechanics. Consequently, it is difficult for a conventional quantum device used in a quantum computer to convert information of electron spin into information of photon with high efficiency.
An object of the present disclosure is to provide a quantum device capable of improving conversion efficiency of information of electron spin into information of photon, and a method for manufacturing a quantum device.

SOLUTION TO PROBLEM

According to an aspect of the present disclosure, there is provided a quantum device including a first waveguide, an optical resonator that is coupled to the first waveguide, a first light source that introduces first light into the first waveguide, and a second light source that irradiates the optical resonator with second light, in which the optical resonator includes a second waveguide extending in a first direction and a color center provided in the second waveguide, the second light source has an optical axis in a second direction perpendicular to the first direction, and the color center is irradiated with the second light.

ADVANTAGEOUS EFFECTS OF INVENTION

According to the present disclosure, conversion efficiency of information of electron spin into information of photon may be improved.
The object and advantages of the invention will be realized and attained by means of the elements and combinations particularly pointed out in the claims.
It is to be understood that both the foregoing general description and the following detailed description are exemplary and explanatory and are not restrictive of the invention.

BRIEF DESCRIPTION OF DRAWINGS

FIG. 1 is a plan view illustrating a quantum device according to a first embodiment.
FIG. 2 is a cross-sectional view illustrating the quantum device according to the first embodiment.
FIG. 3 is a diagram illustrating an example of the operation of the quantum device according to the first embodiment.
FIG. 4 is a diagram illustrating another example of the operation of the quantum device according to the first embodiment.
FIG. 5 is a diagram illustrating a relationship between parameter ($\Omega d/\chi$) and $\gamma mn/\gamma$ (m is 3 or 4, and n is 1 or 2).
FIG. 6 is a perspective view illustrating a method for manufacturing an optical resonator in the quantum device according to the first embodiment (part 1).
FIG. 7 is a perspective view illustrating the method for manufacturing an optical resonator in the quantum device according to the first embodiment (part 2).
FIG. 8 is a perspective view illustrating the method for manufacturing an optical resonator in the quantum device according to the first embodiment (part 3).

FIG. 9 is a perspective view illustrating the method for manufacturing an optical resonator in the quantum device according to the first embodiment (part 4).

FIG. 10 is a perspective view illustrating the method for manufacturing an optical resonator in the quantum device according to the first embodiment (part 5).

FIG. 11 is a diagram illustrating a calculation result of electromagnetic field distribution related to the first embodiment.

FIG. 12 is a diagram illustrating an intensity profile of a standing wave extracted in the vicinity of a color center.

FIG. 13 is a plan view illustrating a quantum device according to a second embodiment.

FIG. 14 is a plan view illustrating a quantum device according to a third embodiment.

FIG. 15 is a diagram illustrating a quantum computation apparatus according to a fourth embodiment.

DESCRIPTION OF EMBODIMENTS

Hereinafter, embodiments of the present disclosure will be specifically described with reference to the attached drawings. Note that, in the present specification and drawings, redundant description may be omitted by giving the same reference sign for constituent elements having substantially the same functional configuration. In the present disclosure, an X1-X2 direction, a Y1-Y2 direction, and a Z1-Z2 direction are directions orthogonal to one another. A plane including the X1-X2 direction and the Y1-Y2 direction is described as an XY plane, a plane including the Y1-Y2 direction and the Z1-Z2 direction is described as a YZ plane, and a plane including the Z1-Z2 direction and the X1-X2 direction is described as a ZX plane. Note that, for convenience, the Z1-Z2 direction is an up-down direction, a Z1 side is an upper side, and a Z2 side is a lower side. Further, a plan view refers to viewing a target object from the Z1 side, and a planar shape refers to the shape of a target object as viewed from the Z1 side.

(First Embodiment)

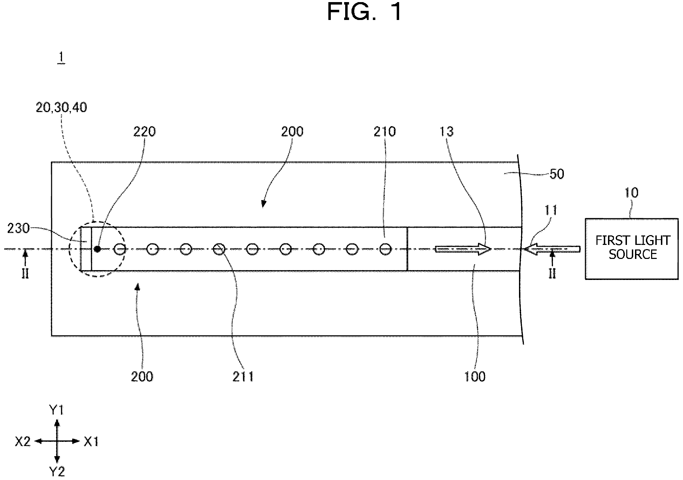

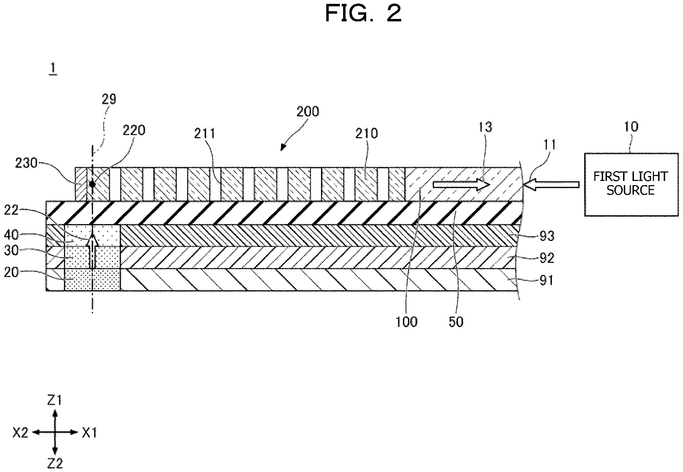

A first embodiment will be described. FIG. 1 is a plan view illustrating a quantum device according to the first embodiment. FIG. 2 is a cross-sectional view illustrating the quantum device according to the first embodiment. FIG. 2 corresponds to a cross-sectional view along line I-I in FIG. 1.

A quantum device 1 according to the first embodiment mainly includes a first waveguide 100, an optical resonator 200, a first light source 10, a second light source 20, a static magnetic field source 30, and a microwave source 40. The second light source 20 is provided in a printed wiring board 91, the static magnetic field source 30 is provided in a printed wiring board 92, and the microwave source 40 is provided in a printed wiring board 93.

The printed wiring board 92 is provided over the printed wiring board 91, and the printed wiring board 93 is provided over the printed wiring board 92. The static magnetic field source 30 is positioned above the second light source 20, and the microwave source 40 is positioned above the static magnetic field source 30. The second light source 20, the static magnetic field source 30, and the microwave source 40 overlap each other in the Z1-Z2 direction. The second light source 20 has an optical axis 29 in the Z1-Z2 direction. For example, the second light source 20 is a coherent light source. The Z1-Z2 direction is an example of a second direction. The stacking order of the printed wiring boards 91, 92, and 93 is not limited to the above-described order.

A board 50 is provided over the printed wiring board 93, and the first waveguide 100 and the optical resonator 200 are provided over the board 50. The board 50 supports the first waveguide 100 and the optical resonator 200. The refractive index of the material of the board 50 is lower than the refractive index of diamond. For example, the material of the board 50 is silicon oxide ($SiO_2$) or sapphire.

The optical resonator 200 includes a second waveguide 210 extending in the X1-X2 direction. The second waveguide 210 includes diamond including a color center 220. For example, the second waveguide 210 is made of diamond including the color center 220. The color center 220 is provided at an end portion of the second waveguide 210 on the X2 side. For example, the color center 220 is provided at a position away from an end surface of the second waveguide 210 on the X2 side toward the X1 side by about several 10 nm. The color center 220 is over the optical axis 29. Therefore, the color center 220 is irradiated with second light 22 emitted by the second light source 20. For example, the color center 220 is a nitrogen-vacancy center (NV center) composed of nitrogen and a vacancy. The color center 220 may be a silicon-vacancy center (SiV center) composed of silicon and vacancies, a germanium-vacancy center (GeV center) composed of germanium and vacancies, a tin-vacancy center (SnV center) composed of tin and vacancies, a lead-vacancy center (PbV center) composed of lead and vacancies, or a boron-vacancy center (BV center) composed of boron and a vacancy. The board 50 is an example of a support. The X1-X2 direction is an example of a first direction.

In the second waveguide 210, a plurality of openings 211 arranged in the X1-X2 direction is formed at equal intervals. The openings 211 penetrate the second waveguide 210 in the Z1-Z2 direction. The openings 211 function as a mirror. Further, the optical resonator 200 includes a reflective film 230 that covers the end surface of the second waveguide 210 on the X2 side. The reflective film 230 is a metal film having a high reflectance with respect to visible light. For example, the reflective film 230 is an Ag film having a thickness of about several 10 nm. The reflective film 230 suppresses emission of light in the optical resonator 200 from the end surface on the X2 side.

The first waveguide 100 is coupled to an end portion of the second waveguide 210 on the X1 side. The first waveguide 100 extends in the X1-X2 direction. The first waveguide 100 includes a nitride semiconductor, for example, AIN, which has a lower refractive index and a lower absorptance in the visible light range than diamond. For example, the first waveguide 100 is made of AIN. The first light source 10 irradiates the first waveguide 100 with first light 11. For example, the first light source 10 is a quantum light source.

In the present embodiment, the following relationship holds. Coupling coefficient g of the optical resonator 200 is smaller than the absolute value of a difference between resonance frequency $w_c$ of the optical resonator 200 and light emission frequency $\omega_a$ of the color center 220 ($|\omega_c - \omega_a|$). Frequency $\omega_d$ of the second light 22 is equal to $\omega_a - 2\chi$. Here, $\chi$ is $g^2/(\omega_c - \omega_a)$.

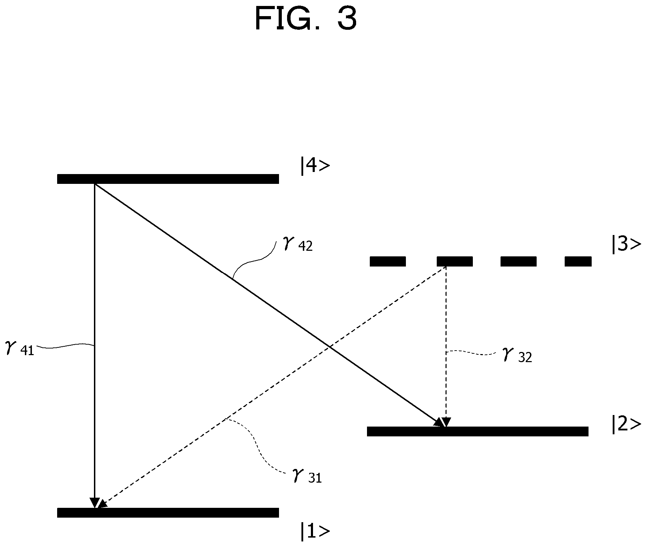

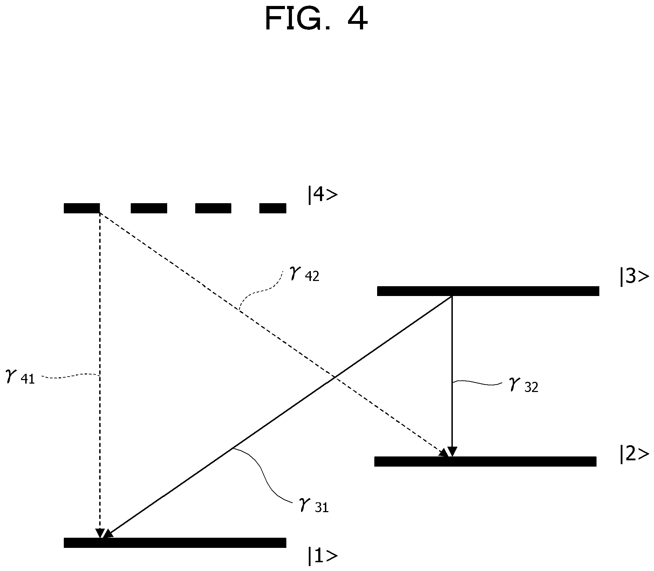

Next, the operation of the quantum device 1 according to the first embodiment will be described. FIG. 3 is a diagram illustrating an example of the operation of the quantum device 1 according to the first embodiment. FIG. 4 is a diagram illustrating another example of the operation of the quantum device 1 according to the first embodiment.

In the quantum device 1, the first light 11 is introduced from the first light source 10 into the first waveguide 100, and the first light 11 reaches the color center 220. The color center 220 forms, in the band gap, a spin level (spin triplet) that is energetically discretized at a frequency of the order of GHz corresponding to the spin quantum number 1 of itself. In this case, when a spin level of which spin magnetic quantum number is 0 and a spin level of which spin magnetic quantum number is -1 are regarded as qubits, spin 0 indicates a light absorption-emission process between ground and excitation levels in the visible light range, that is, a process of emission relaxation. On the other hand, spin -1 indicates a process of non-emission relaxation to the ground level of spin 0 through a metastable state (spin singlet) of spin 0. That is, by measuring photon information (the presence or absence of photon emission) emitted after optical excitation within a time scale in which the coherence of a state is held after state operation by a microwave to a qubit level, reading of a qubit through a photon (spin-photon conversion) may be performed.

Further, with respect to transition between ground and excitation levels for emission relaxation, two systems of two-level systems represented by four levels of |g, 0>, |g, 1>, |e, 0>, and |e, 1> are formed based on the Jaynes-Cummings model. Here, g represents a ground level of emission relaxation, e represents an excitation level of emission relaxation, and 0 or 1 represents the number of photons in the optical resonator 200. With the second light 22 (external control light), these two systems of two-level systems form dressed levels including four levels of |1>, |2>, |3>, and |4> as illustrated in FIG. 3 and FIG. 4. The two levels |1> and |2> are levels of the color center 220 itself, and |3> and |4> are levels formed by irradiation with the second light 22. Here, the relaxation rate from the level |4> to the level |1> is $\gamma_{41}$, the relaxation rate from the level |4> to the level |2> is $\gamma_{42}$, the relaxation rate from the level |3> to the level |1> is $\gamma_{31}$, and the relaxation rate from the level |3> to the level |2> is $\gamma_{32}$. In this case, $\gamma = \gamma_{31} + \gamma_{32} = \gamma_{41} + \gamma_{42}$ holds. When the intensity of the second light 22 is $\Omega_d$, $\gamma_{31}$, $\gamma_{32}$, $\gamma_{41}$, and $\gamma_{42}$ are represented as follows.

$$\gamma_{32}/\gamma = \gamma_{41}/\gamma = \cos^2(\tan^{-1}(2\Omega_d/\chi))$$

$$\gamma_{31}/\gamma = \gamma_{42}/\gamma = \sin^2(\tan^{-1}(2\Omega_d/\chi))$$

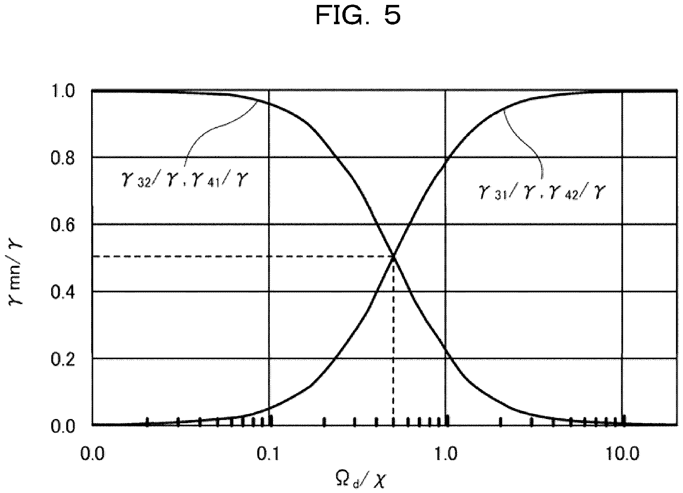

FIG. 5 illustrates a relationship between parameter ($\Omega d/\chi$) and $\gamma_{mn}/\gamma$ (m is 3 or 4, and n is 1 or 2). Here, assuming that the color center 220 is an NV center, $\omega_a = 2.959 \times 10^{11}$ rad/s (637 nm), $\omega_c = \omega_a + 10^{10}$ (1.6 GHz), g = $10^{10}$ rad/s, $\chi = 10^6$ rad/s, $\Omega_d = 5 \times 10^5$ rad/s, and $\gamma = 2.4 \times 10^3$ rad/s. 637 nm is the wavelength corresponding to light emission frequency $\omega_a$ of the color center, and 1.6 GHz is the frequency of the resonator. As illustrated in FIG. 5, when parameter ($\Omega_{d/\chi}$) is 0.5, $\gamma_{31}/\gamma$, $\gamma_{32}/\gamma$, $\gamma_{41}/\gamma$, and $\gamma_{42}/\gamma$ are equal to each other. That is, when parameter ($\Omega d/\chi$) is 0.5, at least relaxation rate $\gamma_{31}$ and relaxation rate $\gamma_{32}$ are equal to each other, or relaxation rate $\gamma_{41}$ and relaxation rate $\gamma_{42}$ are equal to each other. Further, when coupling coefficient g and volume $g\omega_c V_m$ of the optical resonator 200 are taken into consideration, the value of Q represented by $(2g^2/k\gamma) \times (4\pi^2/3\lambda^3) \times V_m$ is about 500. This indicates that highly efficient spin-photon conversion is performed. Ultimately, on-demand (deterministic) optical spin-photon conversion may be possible. Note that k and $\lambda$ represent a relaxation rate and a resonance wavelength of the resonator, respectively.

In the present embodiment, in the example illustrated in FIG. 3, spin-photon conversion is performed focusing on a A-type three-level system using the three levels of |1>, |2>, and |4> without using the level |3>. Further, in the example illustrated in FIG. 4, spin-photon conversion is performed focusing on the A-type three-level system using the three levels of |1>, |2>, and |3> without using the level |4>. When spin-photon conversion is performed, the static magnetic field source 30 generates a static magnetic field that reaches the color center 220, and the microwave source 40 generates a microwave that reaches the color center 220. Third light 13 (inelastically scattered light) having a wavelength different from that of the first light 11 is output from the optical resonator 200 to the first waveguide 100. By observing the third light 13, the state of the color center 220 may be grasped.

As described above, in the first embodiment, transition between ground and excitation levels of one of the spin levels constituting a qubit in the color center 220, which undergoes emission relaxation with respect to the first light 11 (readout light) introduced into the color center 220, is coupled to the optical resonator 200. Further, relaxation rate control is performed on the three-level system formed by application of the second light 22 (external control light). As a result, two relaxation rates from the excitation level to the ground level in the three-level system become equal to each other, and the efficiency of spin-photon conversion may be improved. That is, conversion efficiency of information of electron spin into information of photon may be improved.

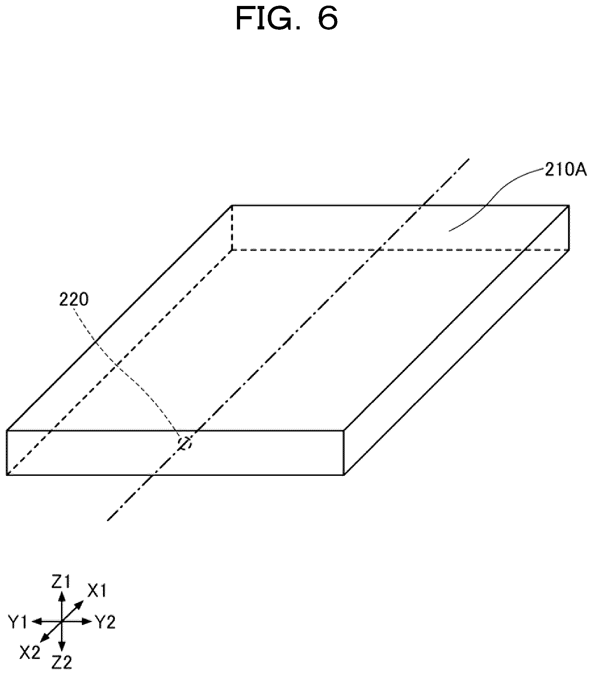

Next, a method for manufacturing the optical resonator 200 will be described. FIG. 6 to FIG. 10 are perspective views illustrating the method for manufacturing the optical resonator 200 in the quantum device 1 according to the first embodiment.

First, as illustrated in FIG. 6, a thin diamond board 210A serving as a base member of the second waveguide 210 is prepared, and the diamond board 210A is cleaned. Next, the color center 220 is formed by implanting a desired element species, for example, nitrogen by the ion implantation method or the like and performing annealing (activation treatment).

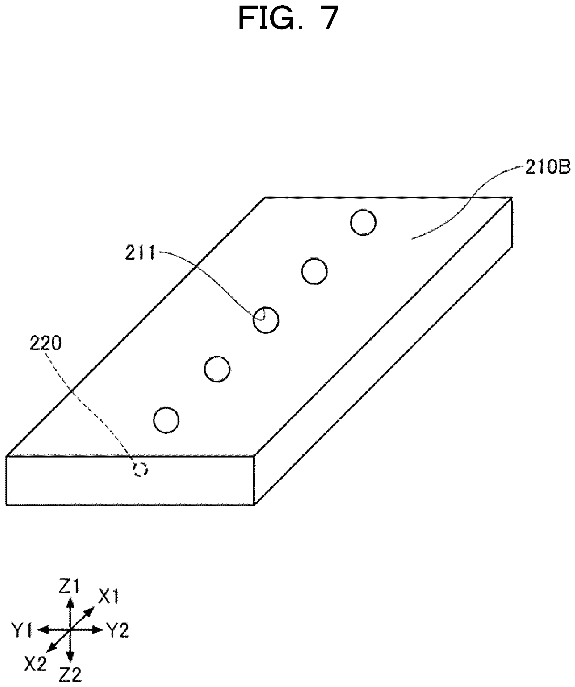

Thereafter, as illustrated in FIG. 7, a diamond board 210B closer to the size of the second waveguide 210 than the diamond board 210A is obtained by processing by the focused ion beam (FIB) method or the like and forming the openings 211.

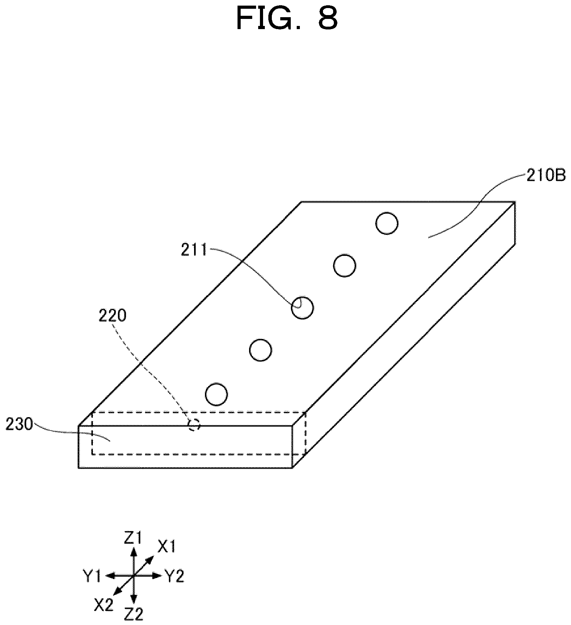

Subsequently, as illustrated in FIG. 8, the reflective film 230 is formed by the vapor deposition method or the like so as to cover an end surface of the diamond board 210B on the X2 side.

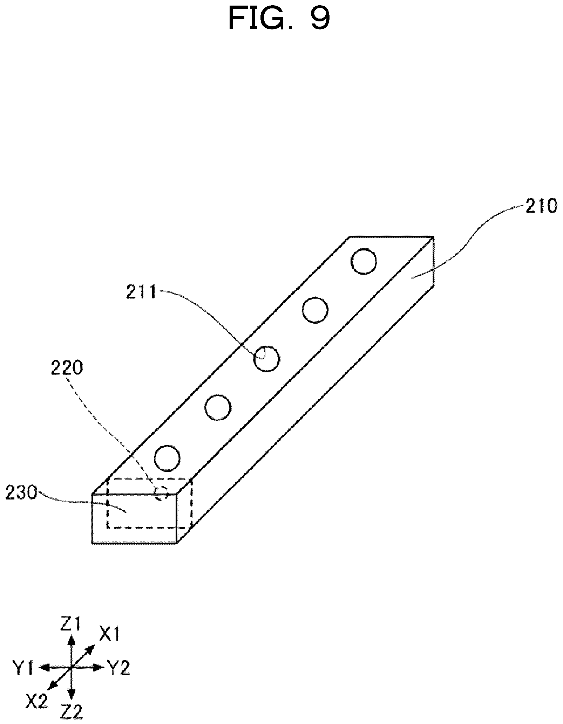

Next, as illustrated in FIG. 9, the diamond board 210B is processed by FIB or the like, and the second waveguide 210 is obtained.

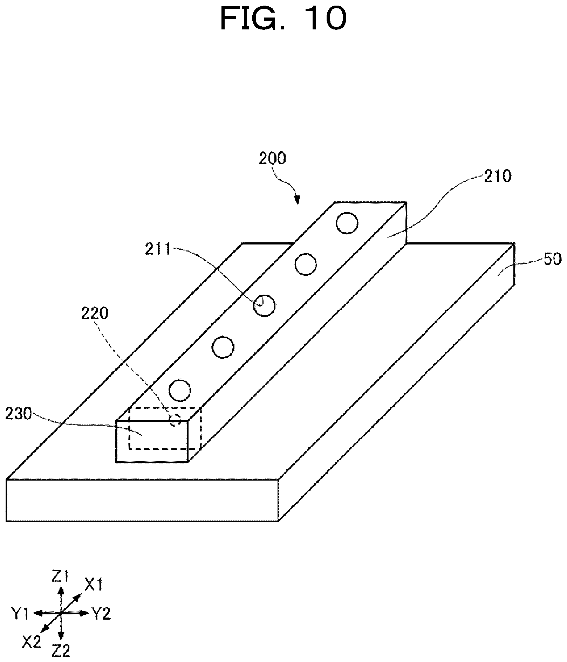

Thereafter, as illustrated in FIG. 10, the second waveguide 210 is bonded over the board 50. For example, the first waveguide 100 is formed over the board 50 in advance.

In this way, the optical resonator 200 may be manufactured.

When the quantum device 1 is manufactured, the printed wiring board 91 including the second light source 20, the printed wiring board 92 including the static magnetic field source 30, and the printed wiring board 93 including the microwave source 40 are stacked. Then, the board 50 provided with the first waveguide 100 and the optical resonator 200 (see FIG. 10) is provided over the printed wiring board 93. The first light source 10 may be coupled to the first waveguide 100 in advance, or may be coupled to the first waveguide 100 after the board 50 is provided over the printed wiring board 93.

Here, a calculation result of electromagnetic field distribution related to the first embodiment will be described. In this calculation, assuming that the color center 220 is an NV center, electromagnetic field distribution in the optical resonator 200 under the following sizes (structural parameters) was obtained.

The distance between the end surface of the second waveguide 210 on the X2 side and the color center 220 is 25 nm. The reflective film 230 is an Ag film having a thickness of 10 nm. The diameter of the openings 211 is 100 nm. The pitch of the openings 211 is 200 nm. The length (size in the X1-X2 direction) of the second waveguide 210 is 2000 nm. The width (size in the Y1-Y2 direction) of the second waveguide 210 is 280 nm. The height (size in the Z1-Z2 direction) of the second waveguide 210 is 120 nm.

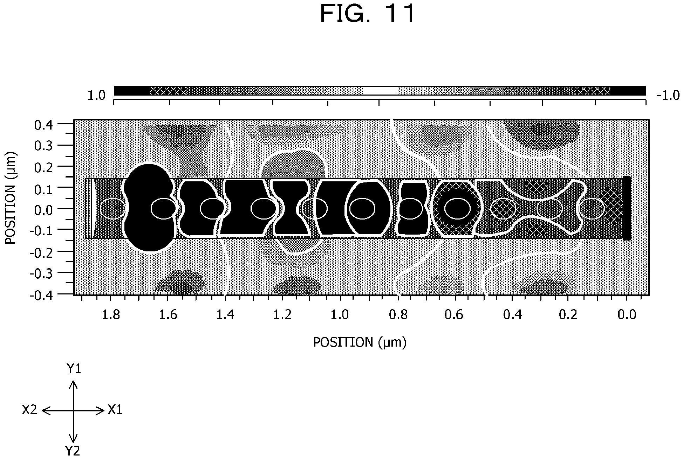

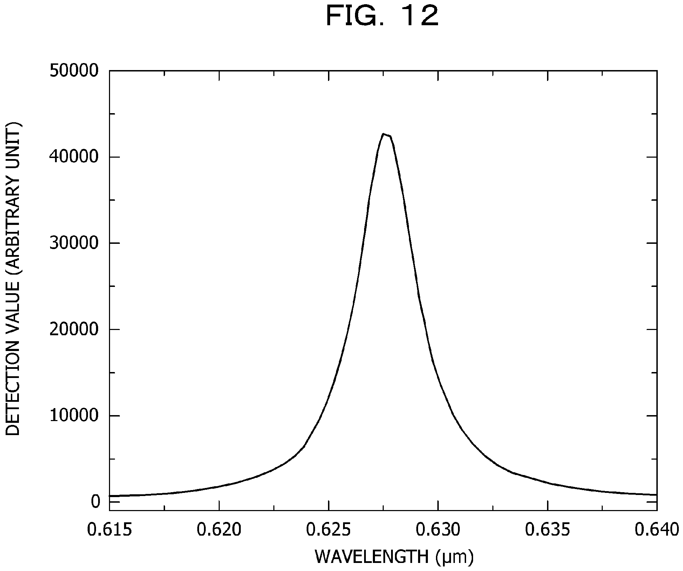

FIG. 11 illustrates a calculation result of electromagnetic field distribution related to the first embodiment. The intensity of an electromagnetic field is standardized. With reference to an end surface of the optical resonator 200 on the X1 side, the horizontal axis in FIG. 11 indicates a position with the X2 side being positive. With reference to the center of the optical resonator 200 in the Y1-Y2 direction, the vertical axis in FIG. 11 indicates a position with the Y1 side being positive. As illustrated in FIG. 11, since the reflective film 230 is provided, release of energy to the X2 side of the reflective film 230 is suppressed. Further, a standing wave having a relatively high electromagnetic field intensity is formed at the position of the color center 220. FIG. 12 illustrates an intensity profile of a standing wave extracted in the vicinity of the color center 220. The value of Q of the optical resonator 200 estimated from the intensity profile illustrated in FIG. 12 is 520. This indicates that highly efficient spin-photon conversion is performed. In general, if the value of Q is about 500, on-demand (deterministic) generation of photons is possible. Therefore, this calculation result of electromagnetic field distribution suggests that on-demand (deterministic) generation of photons is possible with the quantum device 1 according to the first embodiment.

(Second Embodiment)

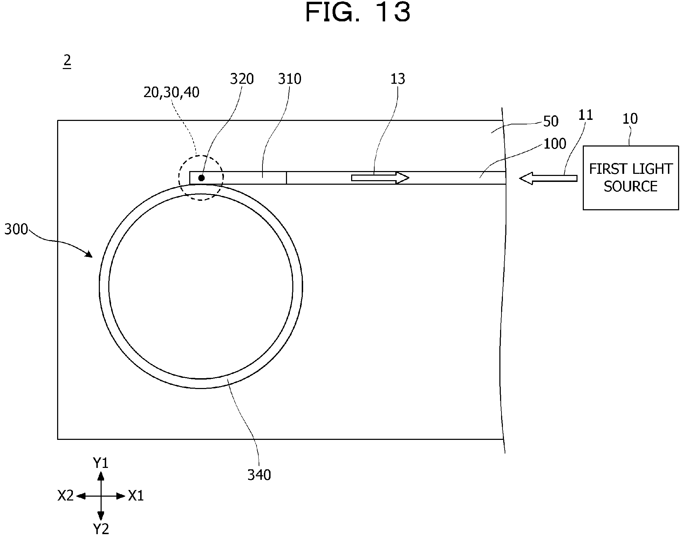

A second embodiment will be described. FIG. 13 is a plan view illustrating a quantum device according to the second embodiment.

A quantum device 2 according to the second embodiment includes an optical resonator 300 instead of the optical resonator 200. The optical resonator 300 includes a second waveguide 310 extending in the X1-X2 direction and a ring resonator 340.

As with the second waveguide 210, the second waveguide 310 includes diamond including a color center 320. For example, the second waveguide 310 is made of diamond including the color center 320. The color center 320 is provided at an end portion of the second waveguide 310 on the X2 side. For example, the color center 320 is provided at a position away from an end surface of the second waveguide 310 on the X2 side toward the X1 side by about several 10 nm. As with the color center 220, the color center 320 is over the optical axis 29 (see FIG. 2). Therefore, the color center 320 is irradiated with the second light 22 emitted by the second light source 20. For example, the color center 320 is an NV center, an SiV center, a GeV center, an SnV center, a PbV center, or a BV center. Unlike the second waveguide 210, openings are not formed in the second waveguide 310.

The ring resonator 340 includes diamond. For example, the ring resonator 340 is made of diamond. The ring resonator 340 is coupled to a portion of the second waveguide 310 where the color center 320 is provided.

Other configurations are similar to those of the first embodiment.

In the second embodiment, the electromagnetic field distribution of eigenmode in the ring resonator 340 is reflected in the second waveguide 310, and the electromagnetic field intensity increases in the vicinity of the color center 320. Consequently, the interaction between the color center 320 and the electromagnetic field is enhanced. That is, absorption and emission of light by the color center 320 are enhanced. Also, by the second embodiment, as with the first embodiment, conversion efficiency of information of electron spin into information of photon may be improved.

(Third Embodiment)

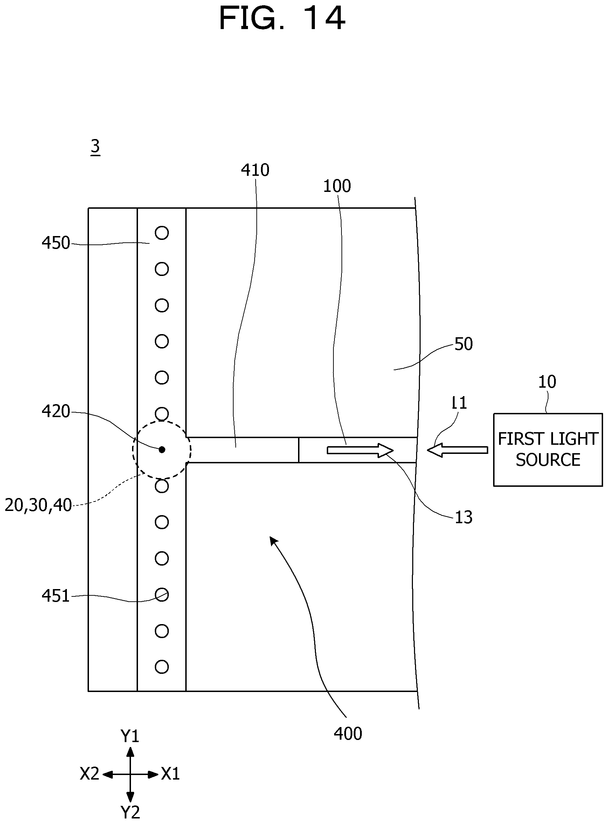

A third embodiment will be described. FIG. 14 is a plan view illustrating a quantum device according to the third embodiment.

A quantum device 3 according to the third embodiment includes an optical resonator 400 instead of the optical resonator 200. The optical resonator 400 includes a second waveguide 410 extending in the X1-X2 direction and a third waveguide 450 extending in the Y1-Y2 direction.

As with the second waveguide 210, the second waveguide 410 includes diamond including a color center 420. For example, the second waveguide 410 is made of diamond including the color center 420. The color center 420 is provided at an end portion of the second waveguide 410 on the X2 side. For example, the color center 420 is provided at a position away from an end surface of the second waveguide 410 on the X2 side toward the X1 side by about several 10 nm. As with the color center 220, the color center 420 is over the optical axis 29 (see FIG. 2). Therefore, the color center 420 is irradiated with the second light 22 emitted by the second light source 20. For example, the color center 420 is an NV center, an SiV center, a GeV center, an SnV center, a PbV center, or a BV center. Unlike the second waveguide 210, openings are not formed in the second waveguide 410.

The third waveguide 450 includes diamond. For example, the third waveguide 450 is made of diamond. The third waveguide 450 is orthogonal to the second waveguide 410 in a T-shape. The third waveguide 450 includes a portion extending from the intersection with the second waveguide 410 toward the Y1 side and a portion extending toward the Y2 side. The color center 420 may also be included in the third waveguide 450. In the third waveguide 450, a plurality of openings 451 arranged in the Z1-Z2 direction is formed at equal intervals. The openings 451 penetrate the third waveguide 450 in the Z1-Z2 direction. The openings 451 function as a mirror.

Other configurations are similar to those of the first embodiment.

In the third embodiment, the electromagnetic field distribution of eigenmode in the third waveguide 450 is reflected in the second waveguide 410, and the electromagnetic field intensity increases in the vicinity of the color center 420. Consequently, the interaction between the color center 420 and the electromagnetic field is enhanced. That is, absorption and emission of light by the color center 420 are enhanced. Also, by the third embodiment, as with the first embodiment, conversion efficiency of information of electron spin into information of photon may be improved.

(Fourth Embodiment)

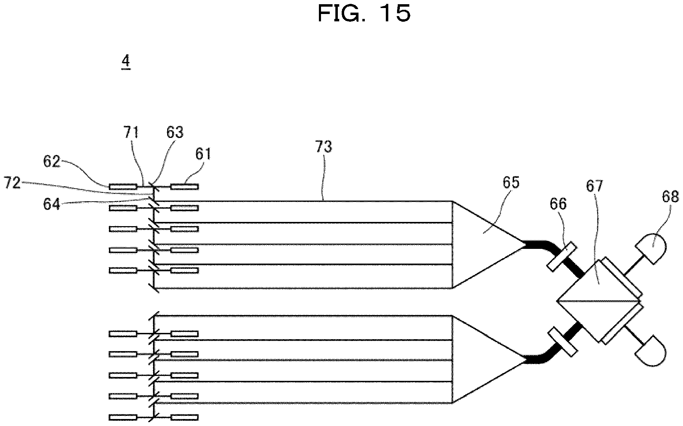

A fourth embodiment will be described. FIG. 15 is a diagram illustrating a quantum computation apparatus according to the fourth embodiment.

A quantum computation apparatus 4 according to the fourth embodiment includes one beam splitter 67, two detectors 68, two wavelength filters 66, and two multiplexers 65. One ends of four waveguides 73 are coupled to each multiplexer 65, a half mirror 64 is provided at the other ends of the waveguides 73, and one end of a waveguide 72 is coupled to the half mirror 64. A waveguide 71 is coupled to the other end of the waveguide 72 in a T-shape. A first light source 61 is coupled to one end of the waveguide 71, and an optical resonator 62 is coupled to the other end. A dielectric mirror 63 is provided at the intersection between the waveguide 71 and the waveguide 72. For example, the first light source 10 is used as the first light source 61. For example, the optical resonator 200, 300, or 400 is used as the optical resonator 62. Although illustration is omitted, as with the first, second, or third embodiment, the second light source 20, the static magnetic field source 30, and the microwave source 40 are provided below the optical resonator 62. For example, the first waveguide 100 is used as the waveguide 71.

As described above, in the fourth embodiment, the structures of the first, second, or third embodiment are arranged in parallel.

When one qubit operation is performed, after the state operation on a color center (qubit) by a microwave, first light (readout light) is incident on the optical resonator 62 through the dielectric mirror 63. Further, the color center is irradiated with second light from a second light source. The first light is reflected by the optical resonator 62, and third light (photon) is output. The third light (photon) is reflected by the dielectric mirror 63 toward the waveguide 72, and is detected by the detector 68 through the half mirror 64, the waveguide 73, the multiplexer 65, the wavelength filter 66, and the beam splitter 67.

When two qubit operation is performed, the third light (photon) output from one multiplexer 65 and the third light (photon) output from the other multiplexer 65 are correlated by the beam splitter 67. By observing the two photons with the detectors, an entangled state between qubits may be formed through the photons.

As described above, a combination of arbitrary gate operation of one qubit and two qubit gate operation enables universal quantum computation. Therefore, according to the present embodiment, a general-purpose type quantum computer using a color center of diamond may be configured.

Although the preferred embodiments and the like have been described in detail above, the present disclosure is not limited to the embodiments and the like described above. Various modifications and replacements may be made to the embodiments and the like described above without departing from the scope of the claims.

CITATION LIST

PTL 1: Japanese Laid-open Patent Publication No. 2014-216596
PTL 2: International Publication Pamphlet No. WO 2020/203746
NPL 1: Kazuki Koshino and three others, "Deterministic Quantum State Switching by Single Photon", Journal of the Physical Society of Japan, Vol. 1, No. 1, 2014

REFERENCE SIGNS LIST

1, 2, 3 Quantum device
4 Quantum computation apparatus
10, 61 First light source
11 First light
13 Third light
20 Second light source
22 Second light
29 Optical axis
30 Static magnetic field source
40 Microwave source
50 Board
62, 200, 300, 400 Optical resonator
71, 72, 73 Waveguide
100 First waveguide
210, 310, 410 Second waveguide
211, 451 Opening
220, 320, 420 Color center
230 Reflective film
340 Ring resonator
450 Third waveguide

**Claims**

1. A quantum device comprising:

   a first waveguide;
   an optical resonator that is coupled to the first waveguide;

a first light source that introduces first light into the first waveguide; and
a second light source that irradiates the optical resonator with second light,
wherein
the optical resonator includes a second waveguide that extends in a first direction and a color center that is provided in the second waveguide,
the second light source has an optical axis in a second direction perpendicular to the first direction, and
the color center is irradiated with the second light.

2. The quantum device according to claim 1, wherein third light of which wavelength is different from that of the first light is output from the optical resonator to the first waveguide.

3. The quantum device according to claim 1, wherein

   the color center is provided at one end portion of the second waveguide, and
   the first waveguide is coupled to the other end portion of the second waveguide.

4. The quantum device according to claim 1 or 2, wherein the device includes

   a static magnetic field source that generates a magnetic field that reaches the color center, and
   a microwave source that generates a microwave that reaches the color center.

5. The quantum device according to claim 1 or 2, wherein the color center includes a composite defect of N, Si, Ge, Sn, or Pb, or arbitrary combination thereof, and a vacancy.

6. The quantum device according to claim 1 or 2, wherein material of the second waveguide is diamond, and a refractive index of material of the first waveguide is lower than a refractive index of diamond.

7. The quantum device according to claim 1 or 2, wherein

   the first light source is a quantum light source, and
   the second light source is a coherent light source.

8. The quantum device according to claim 1 or 2, wherein a plurality of openings arranged in the first direction is formed at equal intervals in the second waveguide.

9. The quantum device according to claim 1 or 2, wherein a coupling coefficient of the optical resonator is smaller than an absolute value of a difference between a resonance frequency of the optical resonator and a light emission frequency of the color center.

10. The quantum device according to claim 1 or 2, wherein

    the first light source is a coherent light source, and
    when a light intensity of the second light source is $\Omega d$, a coupling coefficient of the optical resonator is $g$, a resonance frequency of the optical resonator is $\omega_c$, and a light emission frequency of the color center is $\omega_a$,

$$\chi = g^2/(\omega_c - \omega_a)$$

    and

$$\cos^2(\tan^{-1}(2\Omega_d/\chi)) = \sin^2(\tan^{-1}(2\Omega_d/\chi))$$

    are satisfied.

11. The quantum device according to claim 10, wherein a frequency of the second light is equal to $\omega_a - 2\chi$.

12. The quantum device according to claim 1 or 2, wherein the device includes a support that supports the first waveguide and the optical resonator.

13. The quantum device according to claim 12, wherein a refractive index of material of the support is lower than a refractive index of diamond.

14. A method for manufacturing a quantum device comprising:

a step of providing an optical resonator that is coupled to a first waveguide;
a step of providing a first light source that introduces first light into the first waveguide; and
a step of providing a second light source that irradiates the optical resonator with second light, wherein
the optical resonator includes a second waveguide that extends in a first direction and a color center that is provided in the second waveguide, and
the second light source has an optical axis in a second direction perpendicular to the first direction, and is disposed such that the color center is irradiated with the second light.

15. A quantum computation apparatus comprising the quantum device according to claim 1 or 2.

# FIG. 1

FIG. 2

# FIG. 3

# FIG. 4

# FIG. 5

# FIG. 6

210A

220

Z1
X1
Y1
Y2
X2
Z2

# FIG. 7

# FIG. 8

# FIG. 9

# FIG. 10

FIG. 11

# FIG. 12

# FIG. 13

# FIG. 14

# FIG. 15

## INTERNATIONAL SEARCH REPORT

| | |
|---|---|
| | International application No. |
| | **PCT/JP2022/021961** |

**A. CLASSIFICATION OF SUBJECT MATTER**

*H01L 29/06*(2006.01)i; *G02F 3/00*(2006.01)i
FI: H01L29/06 601Z; G02F3/00

According to International Patent Classification (IPC) or to both national classification and IPC

**B. FIELDS SEARCHED**

Minimum documentation searched (classification system followed by classification symbols)

H01L29/06; G02F3/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | 越野和樹ほか. 単一光子による決定論的な量子状態スイッチング. 日本物理学会誌. 05 December 2014, vol. 69, no. 12, pp. 870-875, Internet: <URL: https://doi.org/10.11316/butsuri.69.12_870>, (KOSHINO, Kazuki et al. Deterministic Switching of a Superconducting Qubit by a Single Microwave Photon), non-official translation (Bulletin of the Physical Society of Japan [Butsuri].) p. 871, left column, line 1 to p. 874, right column, line 40, fig. 1-3 | 1-9, 12, 15 |
| A | | 10-11, 13-14 |
| Y | HAUSMANN et al. Coupling of NV Centers to Photonic Crystal Nanobeams in Diamond. Nano Letters. 24 October 2013, vol. 13, no. 12, pp. 5791-5796, Internet: <URL: https://doi.org/10.1021/nl402174g> p. 5791, left column, line 1 to p. 5795, right column, line 37, fig. 1, 2 | 1-9, 12, 15 |
| A | | 10-11, 13-14 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 August 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/021961** |

## C.  DOCUMENTS CONSIDERED TO BE RELEVANT

| Category* | Citation of document, with indication, where appropriate, of the relevant passages | Relevant to claim No. |
| --- | --- | --- |
| Y | 小坂英男ほか. ダイヤモンド中のスピン量子ビットに対する幾何学的量子ゲート. 日本物理学会誌. 05 November 2020, vol. 75, no. 11, pp. 683-689, Internet: <URL: https://doi.org/10.11316/butsuri.75.11_683>, (KOSAKA, Hideo et al. Geometric Quantum Gates over Spin Qubits in Diamond), non-official translation (Bulletin of the Physical Society of Japan [Butsuri].) | 4 |
| A | p. 687, left column, lines 6-41, fig. 3 | 1-3, 5-15 |
| Y | MOURADIAN et al. Scalable Integration of Long-Lived Quantum Memories into a Photonic Circuit. PHYSICAL REVIEW X. 21 July 2015, vol. 5, 031009, Internet: <URL: https://doi.org/10.1103/PhysRevX.5.031009> | 6, 12 |
| A | p. 1, right column, lines 8-10, p. 2, left column, line 1 to p. 3, left column, line 14, fig. 1, 2 | 1-5, 7-11, 13-15 |
| Y | LU et al. Aluminum nitride integrated photonics platform for the ultraviolet to visible spectrum. Optics EXPRESS. 30 April 2018, vol. 26, no. 9, pp. 11147-11160, Internet: <URL: https://doi.org/10.1364/OE.26.011147> | 6-7 |
| A | p. 11149, line 1 to p. 11150, line 43, p. 11154, line 1 to p. 11156, line 42, fig. 1, 2, 4 | 1-5, 8-15 |
| A | US 2015/0378261 A1 (ENGLUND et al.) 31 December 2015 (2015-12-31) paragraphs [0044]-[0060], [0100]-[0109], fig. 2-4, 17-19 | 1-15 |
| A | WO 2022/070341 A1 (FUJITSU LTD.) 07 April 2022 (2022-04-07) paragraphs [0014]-[0049], [0069]-[0092], fig. 1-7, 20, 22 | 1-15 |

Form PCT/ISA/210 (second sheet) (January 2015)

**INTERNATIONAL SEARCH REPORT**
**Information on patent family members**

| International application No. |
| --- |
| **PCT/JP2022/021961** |

| Patent document cited in search report | | | Publication date (day/month/year) | Patent family member(s) | Publication date (day/month/year) |
| --- | --- | --- | --- | --- | --- |
| US | 2015/0378261 | A1 | 31 December 2015 | TW 201600451 A<br>paragraphs [0043]-[0063],<br>[0094]-[0103], fig. 2-4, 17-19 | |
| WO | 2022/070341 | A1 | 07 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014216596 A

- WO 2020203746 A

**Non-patent literature cited in the description**

- **KAZUKI KOSHINO**. Deterministic Quantum State Switching by Single Photon. *Journal of the Physical Society of Japan*, 2014, vol. 1 (1)